# EUROPEAN PATENT APPLICATION

(11) **EP 4 317 945 A1**
(43) Date of publication of application: **07.02.2024**
(21) Application number: 22936467.4
(22) Date of filing: 05.04.2022
(51) Int. Cl.: G01N 21/33

(54) **GAS ANALYZER**

(71) Applicant: Fuji Electric Co., Ltd., Kawasaki-shi, Kanagawa 210-9530 (JP)
(72) Inventor: OTO Masanori, Kawasaki-shi, Kanagawa 210-9530 (JP); TAKEDA Naoki, Kawasaki-shi, Kanagawa 210-9530 (JP); HIGASHI Ryouichi, Kawasaki-shi, Kanagawa 210-9530 (JP); LI Bo, Kawasaki-shi, Kanagawa 210-9530 (JP)
(74) Representative: MERH-IP Matias Erny Reichl Hoffmann Patentanwälte PartG mbB
(86) International application number: PCT/JP2022/017085
(87) International publication number: WO 2023/195067

(57) **Abstract**

A gas analyzer that measures a concentration of a measurement target component which is contained in a sample gas, the gas analyzer including: a light source unit that emits light having an absorption wavelength of the measurement target component; a collimator unit that converts the light into a collimated light; a cell that houses one or more reflecting mirrors that reflect the light, in a space in which the sample gas is encapsulated; a light receiving element that acquires a radiation spectrum of the light which has passed through the cell; and a processing unit that processes a light reception signal of the light receiving element to measure the concentration of the measurement target component, is provided. In the gas analyzer, the one or more reflecting mirrors include a first reflecting mirror at which the collimated light is first reflected, the first reflecting mirror includes a recessed surface portion that reflects the collimated light, and a width of the recessed surface portion is smaller than a width of the collimated light.

## Description

### BACKGROUND

### 1. TECHNICAL FIELD

The present invention relates to a gas analyzer.

### 2. RELATED ART

In the related art, a gas analyzerthat uses a spectral analysis is known (for example, refer to Patent Document 1 and Non-Patent Document 1).

Patent Document 1: Japanese Patent Application Publication No. 2001-188043

Non-Patent Document 1: Quantitative Spectroscopy Radiative Transfer Vol. 56, No. 2, pp. 187-208, 1996, Johan Mellqvist and Arne Rosen "DOAS FOR FLUE GAS MONITORING - I. TEMPERATURE EFFECTS IN THE U.V./VISIBLE ABSORPTION SPECTRA OF NO, N02, SO2, AND NH3" TECHNICAL PROBLEM

It is preferable for a gas analyzer to be able to precisely measure a gas concentration.

### GENERAL DISCLOSURE

In order to solve the above problem, a first aspect of the present invention provides a gas analyzer that measures a concentration of a measurement target component which is contained in a sample gas. The gas analyzer may include a light source unit that emits light having an absorption wavelength of the measurement target component. The gas analyzer may include a collimator unit that converts the light into a collimated light. The gas analyzer may include a cell that houses one or more reflecting mirrors that reflect the light, in a space in which the sample gas is encapsulated. The gas analyzer may include a light receiving element that acquires a radiation spectrum of the light which has passed through the cell. The gas analyzer may include a processing unit that processes a light reception signal of the light receiving element to measure the concentration of the measurement target component. The one or more reflecting mirrors may include a first reflecting mirror at which the collimated light is first reflected. The first reflecting mirror may include a recessed surface portion that reflects the collimated light. A width of the recessed surface portion may be smaller than a width of the collimated light.

An entire width of the first reflecting mirror may be smaller than the width of the collimated light.

The width of the recessed surface portion may be 80% or less of the width of the collimated light.

The width of the recessed surface portion may be 50% or more of the width of the collimated light.

The one or more reflecting mirrors may include a second reflecting mirror arranged at a subsequent stage of the first reflecting mirror. The second reflecting mirror may include a recessed surface portion that reflects the collimated light. A width of the recessed surface portion of the second reflecting mirror may be smaller than the width of the collimated light.

The width of the recessed surface portion of the first reflecting mirror and the width of the recessed surface portion of the second reflecting mirror may be identical.

The width of the recessed surface portion of the second reflecting mirror may be greater than the width of the recessed surface portion of the first reflecting mirror.

The one or more reflecting mirrors may include a returning reflecting mirror that reflects the collimated light radiated from the second reflecting mirror to the second reflecting mirror. The returning reflecting mirror may include a recessed surface portion that reflects the collimated light. A width of the recessed surface portion of the returning reflecting mirror may be smaller than the width of the collimated light.

The one or more reflecting mirrors may include a central reflecting mirror that reflects the collimated light radiated from the first reflecting mirror to the second reflecting mirror, and reflects the collimated light radiated from the second reflecting mirror to the first reflecting mirror. The central reflecting mirror may include a recessed surface portion that reflects the collimated light. A width of the recessed surface portion may be greater than the width of the collimated light.

The gas analyzer may include a notch filter that is arranged in any optical path from the light source unit to the light receiving element and that has a restriction band for reducing an intensity at any peak of the radiation spectrum of the light which is emitted by the light source unit.

The summary clause does not necessarily describe all necessary features of the embodiments of the present invention. The present invention may also be a sub-combination of the features described above.

### BRIEF DESCRIPTION OF THE DRAWINGS

Fig. 1 is a diagram showing an example of a gas analysis apparatus 200.
Fig. 2 is a diagram showing a configuration example of a gas analyzer 100 according to a first example embodiment.
Fig. 3 is a diagram showing an example of a radiation spectrum of light 106 which is emitted by a light source unit 120.
Fig. 4 is a diagram showing a relationship between an intensity of the light 106 in a predetermined wavelength and a measurement error.
Fig. 5 is a diagram showing an example of a transmission characteristic of a notch filter 110.
Fig. 6 is a diagram showing an example of the radiation spectrum of the light 106 which is incident on a light receiving element 126, when the notch filter 110 is used.
Fig. 7 is a diagram showing another configuration example of the gas analyzer 100.
Fig. 8 is a diagram showing another configuration example of the gas analyzer 100.
Fig. 9 is a diagram showing an example of adjusting a wavelength of a restriction band of the notch filter 110.
Fig. 10 is a diagram showing a reflecting mirror placed at a subsequent stage of the notch filter 110.
Fig. 11 is a diagram of a reflecting surface 150 of the reflecting mirror placed at the subsequent stage of the notch filter 110, viewed from a travel direction of the light 106.
Fig. 12 is a diagram showing another configuration example of the gas analyzer 100.
Fig. 13 is a diagram for describing the gas analyzer 100 according to a second example embodiment.
Fig. 14 is a diagram of a recessed surface portion 151 of a first reflecting mirror 114-1, and a spot 192 of the collimated light 106 at a position of the recessed surface portion 151, as seen from the travel direction of the collimated light 106.
Fig. 15 is a diagram of the recessed surface portion 151 of a second reflecting mirror 114-2, as seen from the travel direction of the collimated light 106.
Fig. 16 is a diagram of the recessed surface portion 151 of a central reflecting mirror 112, and the spot 192 of the collimated light 106 at a position of the recessed surface portion 151, as seen from the travel direction of the collimated light 106.
Fig. 17 is a diagram showing another shape example of the recessed surface portion 151 of the central reflecting mirror 112.
Fig. 18 is a diagram of the recessed surface portion 151 of a returning reflecting mirror 115, as seen from the travel direction of the collimated light 106.
Fig. 19 is a diagram for describing an operation test of the gas analyzer 100.
Fig. 20 is a diagram showing a measured value of an amount of light received by the light receiving element 126 in a reference example.
Fig. 21 is a diagram showing a measured value of an amount of the light received by the light receiving element 126 in the second example embodiment.
Fig. 22 is a diagram showing the gas analyzer 100 according to a third example embodiment.

### DESCRIPTION OF EXEMPLARY EMBODIMENTS

Hereinafter, the present invention will be described through embodiments of the invention, but the following embodiments do not limit the invention according to claims. In addition, not all of the combinations of features described in the embodiments are essential to the solution of the invention.

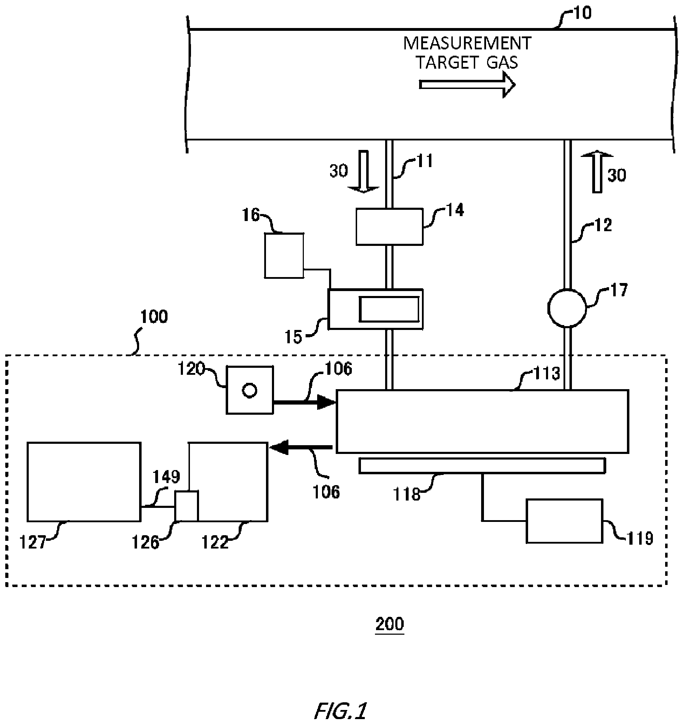

Fig. 1 is a diagram showing an example of a gas analysis apparatus 200. The gas analysis apparatus 200 measures a concentration of a measurement target component which is contained in a measurement target gas which passes through a flue 10. The measurement target gas is, for example, an exhaust gas from an engine or the like, but is not limited to this. The measurement target component is sulfur oxide (SOₓ), nitrogen oxide (NOₓ), ammonia (NH₃), or the like, but is not limited to this.

The gas analysis apparatus 200 includes a gas intake pipe 11, a gas outlet pipe 12, and a gas analyzer 100. The gas analysis apparatus 200 may further include at least any of a gas filter 14, a preheater 15, a preheating temperature controller 16, or a pump 17.

The gas intake pipe 11 and the gas outlet pipe 12 are connected to the flue 10. The gas intake pipe 11 introduces, into the gas analyzer 100, a sample gas 30 which is a part of the measurement target gas flowing through the flue 10. The gas analyzer 100 measures a concentration of the measurement target gas contained in the sample gas 30. The gas outlet pipe 12 discharges, to the flue 10, the sample gas 30 processed by the gas analyzer 100.

The gas intake pipe 11 may be connected to the gas filter 14 that removes dust in the sample gas 30. The gas intake pipe 11 may be connected to the preheater 15 that preheats the sample gas 30. In the preheater 15, a temperature may be adjusted by the preheating temperature controller 16. The gas outlet pipe 12 may be connected to the pump the 17. The pump 17 draws the sample gas 30 from the gas analyzer 100, and discharges the sample gas 30 to the flue 10.

The gas analyzer 100 measures the concentration of the measurement target component which is contained in the introduced sample gas 30. By way of example, the gas analyzer 100 measures the concentration of the measurement target component by differential optical absorption spectroscopy (DOAS), for example, as disclosed in Non-Patent Document 1. A gas component absorbs light of a specific absorption wavelength in accordance with a type of gas. A degree to which the light is absorbed is changed by the concentration of the gas component. In the differential optical absorption spectroscopy, the light containing a wavelength component in accordance with the measurement target component, is caused to pass through the sample gas 30, and intensities of the wavelength component before and after the passage, are compared to each other, thereby measuring the concentration of the measurement target component which is contained in the sample gas 30. At this time, by removing a broad variation from a wavelength spectrum obtained by measuring the light which has passed through the sample gas 30, it is possible to remove an influence due to a variation in an amount of light of a light source, or the dust and mist in the sample gas 30. This makes it possible to stably measure the variation in the wavelength spectrum by the measurement target component, and makes it possible to stably measure the concentration of the measurement target component.

The gas analyzer 100 includes a cell 113, a light source unit 120, a light receiving element 126, and a processing unit 127. The gas analyzer 100 may further include at least any of a heater 118, a temperature adjustment unit 119, or a spectroscope 122.

The light source unit 120 emits light 106. In the present example, the light source unit 120 emits the light 106 having an absorption wavelength of the measurement target component. By way of example, the light source unit 120 is a flash lamp that can control flash-time to be extremely short. The light source unit 120 may be a xenon flash lamp. By using the xenon flash lamp as the light source unit 120, it is possible to stably emit the light 106. It is preferable for the light source unit 120 of the present example to flash at a regular flash cycle. In the present example, the light 106 is light in an ultraviolet region (a wavelength range: 200 nm to 400 nm).

The cell 113 encapsulates the sample gas 30. When the concentration of the measurement target component contained in the sample gas 30 is analyzed, the sample gas 30 may be introduced into the cell 113 via the gas intake pipe 11. In addition, after the analysis, the sample gas 30 may be discharged from the cell 113 via the gas outlet pipe 12.

The light 106 from the light source unit 120 is incident on the cell 113. The light 106 passes through the sample gas 30 inside the cell 113 to be emitted outside the cell 113. The cell 113 may be a multi-reflecting cell. In this case, the light 106 incident on the cell 113 is repeatedly reflected on the inside of the cell 113 to be emitted to the outside of the cell 113.

The cell 113 may be provided with the heater 118 to keep the temperature of the sample gas 30 at a predetermined temperature. The cell 113 may be in contact with the heater 118. The temperature of heater 118 may be controlled by the temperature controller 119.

The light receiving element 126 acquires a radiation spectrum of the light 106 which has passed through the cell 113. The light receiving element 126 measures the intensity of the light 106 spectrally dispersed by the spectroscope 122. The spectroscope 122 may spectrally disperse the light 106 into a plurality of wavelength bands in a predetermined wavelength range. The predetermined wavelength range is, for example, a wavelength range of 200 nm or more and 500 nm or less. The wavelength range is not limited to this. The light receiving element 126 acquires the radiation spectrum of the light 106 by acquiring the intensity of the light 106 for each wavelength band.

The light receiving element 126 acquires the intensity of the light 106 for each wavelength band. By way of example, the light receiving element 126 is a CMOS (Complementary Metal Oxide Semiconductor) line sensor. The radiation spectrum of the light 106 acquired by the light receiving element 126 is transmitted to the processing unit 127 as a light reception signal.

The processing unit 127 processes the light reception signal of the light receiving element 126. The processing unit 127 may convert the light reception signal into a digital signal and perform digital arithmetic processing. The processing unit 127 measures the concentration of the measurement target component contained in the sample gas 30, based on the light reception signal of the light receiving element 126. The processing unit 127 may measure the concentration of the measurement target component by acquiring a change in the intensity of the light 106 at the absorption wavelength of the measurement target component (that is, a change in the intensity of the light 106 which has passed through the cell 113, with respect to the intensity of the light 106 emitted by the light source unit 120). In the present example, the processing unit 127 is connected to the light receiving element 126 in a wired manner via a communication line 149, but may be wirelessly connected.

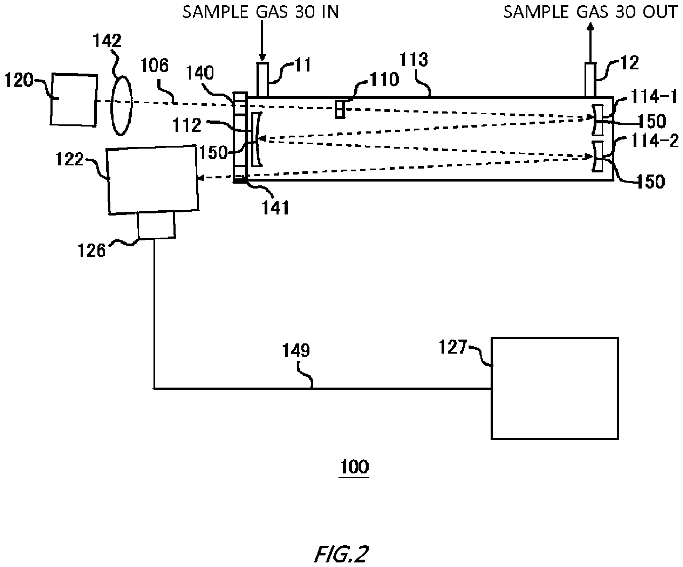

Fig. 2 is a diagram showing a configuration example of a gas analyzer 100 according to a first example embodiment. In Fig. 2, the heater 118 and the temperature adjustment unit 119 are omitted. In addition, the gas analyzer 100 of the present example further includes a collimator lens 142. The collimator lens 142 converts the light 106 emitted by the light source unit 120 into collimated light. The collimated light is light which is more like parallel light than the light 106 emitted by the light source unit 120. The collimated light may not be perfect parallel light. The collimator lens 142 collects the light 106 and emits the collimated light in which a spread of the light 106 is suppressed.

The cell 113 encapsulates the sample gas 30. The cell 113 is provided with a light entrance window 140 and a light emission window 141. In Fig. 2, the light entrance window 140 and the light emission window 141 are provided on the same surface of the cell 113; however, the light entrance window 140 and the light emission window 141 may be provided on different surfaces. The light 106 passes through the light entrance window 140 to enter inside the cell 113. The light 106 which has passed through the sample gas 30 inside the cell 113 passes through the light emission window 141 to be emitted to the outside of the cell 113.

In the cell 113, in a space in which the sample gas 30 is encapsulated, one or more reflecting mirrors that reflect the light 106 are housed. The reflecting mirrors are arranged for the light 106 introduced into the cell 113 to be reflected multiple times inside the cell 113. For example, the reflecting mirrors are arranged near both of end portions of the cell 113 in a longitudinal direction. In this case, the light 106 reciprocates inside the cell 113 along the longitudinal direction of the cell 113. By the light 106 reciprocating inside the cell 113, it is possible to lengthen an optical path length of the light 106 passing through the sample gas 30, and even when an amount of the measurement target component is very small, it is possible to measure the concentration with a high precision.

In the present example, a first reflecting mirror 114-1, a second reflecting mirror 114-2, and a central reflecting mirror 112 are provided inside the cell 113. The first reflecting mirror 114-1 is a reflecting mirror that the light 106 which has passed through the light entrance window 140, first reaches. The second reflecting mirror 114-2 is a reflecting mirror on which the light 106 is lastly reflected to pass through the light emission window 141. The central reflecting mirror 112 further reflects the light 106 which has been reflected by the first reflecting mirror 114-1. In addition, the central reflecting mirror 112 reflects any incident light 106, toward the second reflecting mirror 114-2. In the example of Fig. 2, the central reflecting mirror 112 reflects the light 106 incident from the first reflecting mirror 114-1, toward the second reflecting mirror 114-2. The light 106 reflected at the second reflecting mirror 114-2 is emitted from the light emission window 141 to the outside of the cell 113.

The central reflecting mirror 112, the first reflecting mirror 114-1, and the second reflecting mirror 114-2 are arranged such that respective reflecting surfaces 150 face each other. The light 106 is reflected at each of the reflecting surfaces 150. In the example of Fig. 2, between the end portions of the cell 113 in the longitudinal direction, the central reflecting mirror 112 is arranged at an end portion on a side on which the light entrance window 140 and the light emission window 141 are provided. Between the end portions of the cell 113 in the longitudinal direction, the first reflecting mirror 114-1 and the second reflecting mirror 114-2 are arranged at an end portion on an opposite side of the central reflecting mirror 112. In the example of Fig. 2, the two reflecting mirrors 114 are arranged at positions facing the central reflecting mirror 112; however; in another example, more reflecting mirrors 114 may be arranged at positions facing the central reflecting mirror 112. In this case, it is possible to increase the number of times the light 106 reciprocates inside the cell 113, and to further increase a distance by which the light 106 passes through the sample gas 30. It should be noted that a plurality of reflecting mirrors 114 facing the central reflecting mirror 112 may form an integrated reflecting mirror. In this case, in the reflecting mirror, a region that the light which has passed through the light entrance window 140, first reaches, is the first reflecting mirror 114-1; and a region on which the light is lastly reflected to pass through the light emission window 141, is the second reflecting mirror 114-2.

The gas analyzer 100 of the present example includes a notch filter 110. The notch filter 110 is arranged in any optical path through which the light 106 passes from the light source unit 120 to the light receiving element 126. The notch filter 110 has a restriction band for reducing the intensity at any peak of the radiation spectrum of the light 106 which is emitted by the light source unit 120. For example, the notch filter 110 has a structure in which a plurality of dielectric films with refractive indices different from each other, are stacked along the travel direction of the light 106.

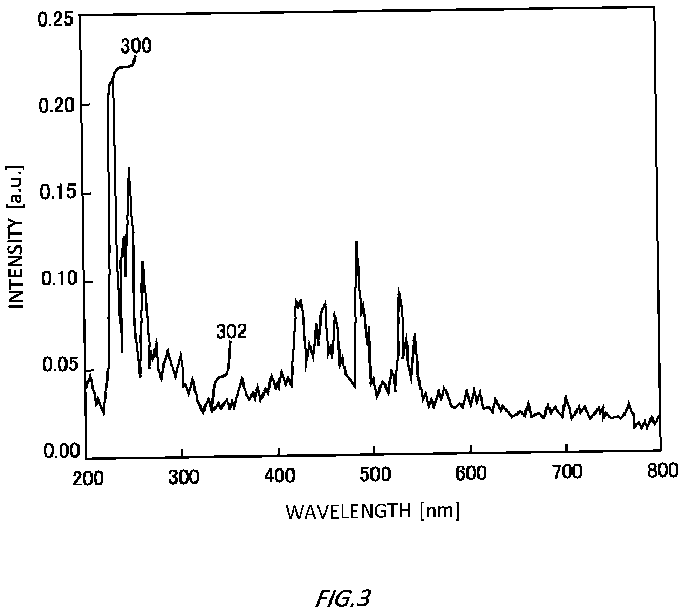

Fig. 3 is a diagram showing an example of a radiation spectrum of light 106 which is emitted by a light source unit 120. In Fig. 3, a horizontal axis represents the wavelength and a vertical axis represents the intensity of light 106. The radiation spectrum of the light 106 has a plurality of peaks. A peak is a part where the intensity indicates a local maximum value, in the radiation spectrum shown in Fig. 3. For example, the radiation spectrum of Fig. 3 has a peak 300 near the wavelength of 230 nm. The peak 300 may be a peak with a highest intensity among the plurality of peaks in the radiation spectrum.

The radiation spectrum of the present example indicates that the intensity is 0.20 or more at the peak 300. On the other hand, the intensity of the light 106 is 0.05 or less in a region 302 near the wavelength of 330 nm. That is, the peak 300 has an intensity which is four times or more than that in the region 302. The light receiving element 126 has a measurement range (a dynamic range). When the dynamic range of the light receiving element 126 is set according to the peak 300, the intensity of the light 106 can be measured only in a partial range of the dynamic range, in the wavelength band of the region 302. Because of that, in a wavelength region where the intensity of the radiation spectrum of the light 106 is low, a ratio of a signal component to a noise component such as thermal noise or stray light in the light receiving element 126, becomes small, and thus a measurement precision decreases.

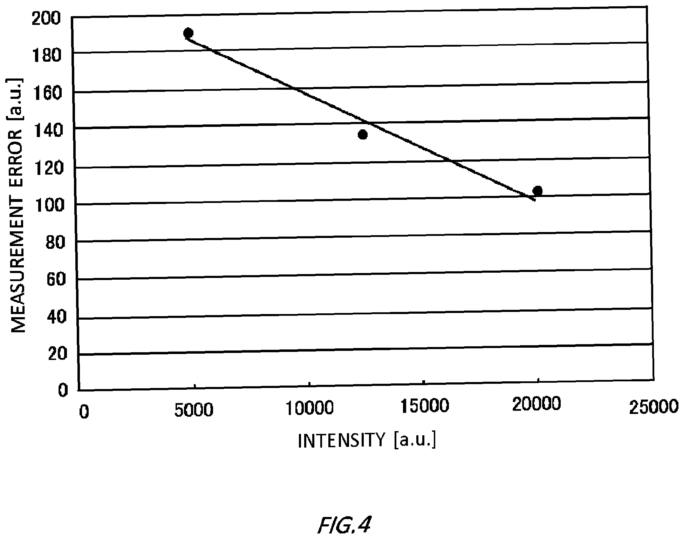

Fig. 4 is a diagram showing a relationship between an intensity of the light 106 in a predetermined wavelength and a measurement error. The horizontal axis represents a measured value of the intensity of the light 106 in the light receiving element 126. The light receiving element 126 of the present example is the CMOS line sensor. The dynamic range of the light receiving element 126 of the present example is approximately 100 dB. When the dynamic range in the light receiving element 126 is quantized into a digital value, it is 0 to 65535 (96.4 dB). The dynamic range is set for the intensity of the light 106 at the peak 300 to be near an upper limit of a range of the measured value.

In Fig. 4, the vertical axis indicates that the smaller a value is, the smaller the measurement error is. As shown in Fig. 4, the greater the intensity of light 106 is, the smaller the measurement error is. In the example of Fig. 4, when a signal intensity is approximately 20000, the measurement error is sufficiently small. In a wavelength band in which the intensity of light 106 is small, as in the region 302 in Fig. 3, the measured value in the light receiving element 126 becomes 16383.75 (65535 / 4) or less. Because of that, the measurement error in the region 302 becomes great. That is, when there is a difference in intensities of the light 106 in a plurality of wavelengths, the dynamic range of the light receiving element 126 becomes small in some wavelength among the plurality of wavelengths, and the measurement precision in this wavelength will be degraded. Because of that, when the intensities of the light 106 in the plurality of wavelengths are measured, it is preferable to reduce the difference in the intensities of the light 106 as much as possible between each measurement wavelength.

As shown in Fig. 2, the gas analyzer 100 of the present example includes the notch filter 110 that reduces the intensity of the wavelength band including any peak 300 of the light 106. In this manner, the difference in the intensity in the radiation spectrum of the light 106 becomes small, and the measurement error in the plurality of wavelengths is reduced.

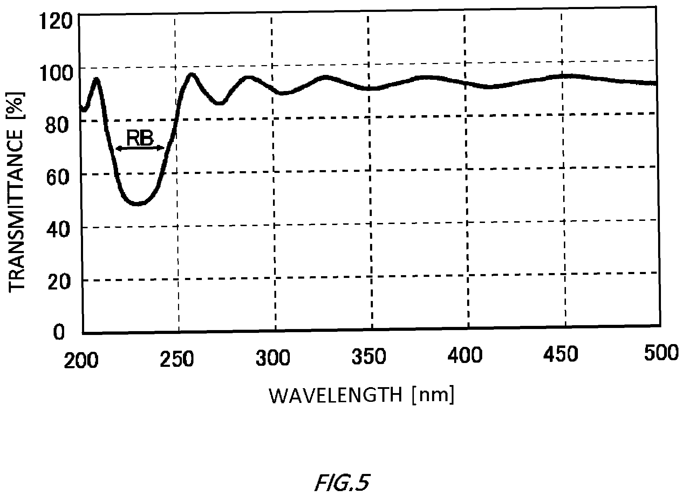

Fig. 5 is a diagram showing an example of a transmission characteristic of a notch filter 110. The horizontal axis of Fig. 5 represents the wavelength of the light 106 incident on the notch filter 110. The vertical axis represents a ratio of the intensity of light 106 which is emitted from the notch filter 110, to the intensity of the light 106 incident on the notch filter 110. The notch filter 110 has a restriction band RB in which transmittance indicates a local minimum value. The restriction band RB is, for example, a band in which the transmittance is 70% or less. The local minimum value of the transmittance in the restriction band RB may be 20% or more, may be 30% or more, or may be 40% or more.

The wavelength of the peak 300 is included in the restriction band RB. This makes it possible to reduce the intensity of the peak 300, and to reduce the difference in the intensity in the radiation spectrum of the light 106. When the light source unit 120 is a xenon flash lamp, the center wavelength of the restriction band RB may exist in a range of 220 nm to 240 nm. A width of the restriction band RB may be 10 nm or more, or may be 20 nm or more. The width of the restriction band RB may be 40 nm or less, or may be 30 nm or less.

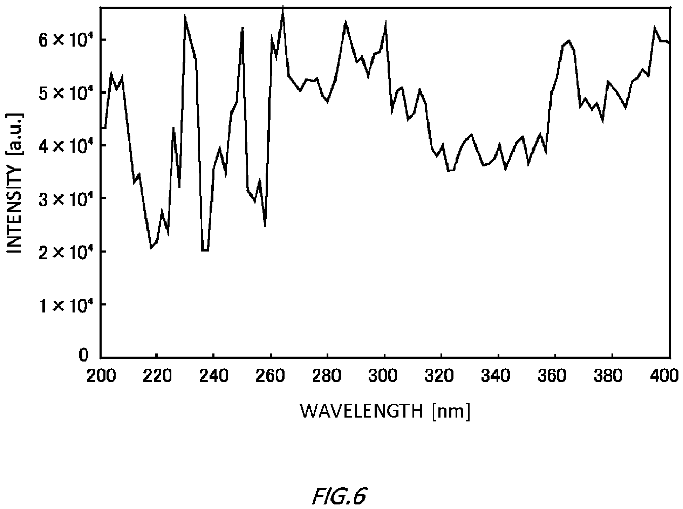

Fig. 6 is a diagram showing an example of the radiation spectrum of the light 106 which is incident on a light receiving element 126, when the notch filter 110 is used. In Fig. 6, the horizontal axis represents the wavelength and the vertical axis represents the intensity of the light 106. In comparison to the radiation spectrum of the light 106 compared in Fig. 3, the intensity near the wavelength of 230 nm is weakened. By using the notch filter 110, it is possible to suppress the difference in the intensity of the radiation spectrum of the light 106, and it is possible to enhance the measurement precision.

As shown in Fig. 2, the notch filter 110 may be arranged in the optical path inside the cell 113. The notch filter 110 may be arranged in the optical path between the light entrance window 140 and the first reflecting mirror 114-1.

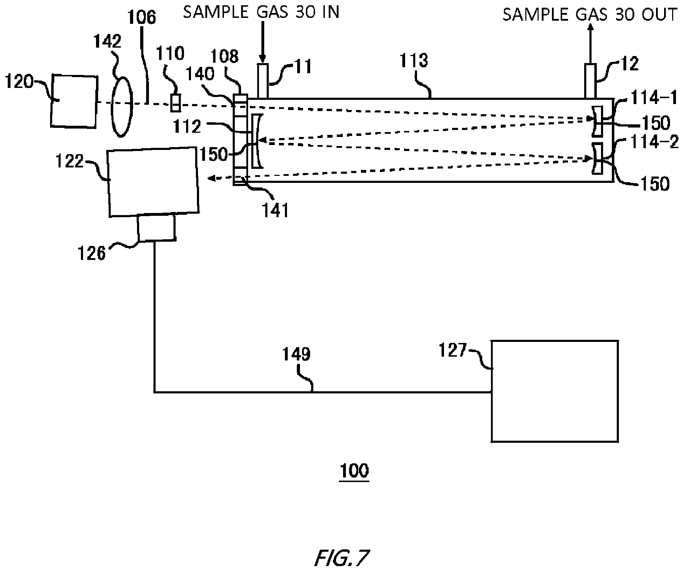

Fig. 7 is a diagram showing another configuration example of the gas analyzer 100. The gas analyzer 100 of the present example is different from that of the examples of Fig. 2 to Fig. 6 in the position at which the notch filter 110 is provided. Other structures are similar to those of any of the aspects described in Fig. 2 to Fig. 6.

The notch filter 110 of the present example is arranged in the optical path between the light source unit 120 and the light entrance window 140 of the cell 113. The notch filter 110 may be arranged between an optical member such as the collimator lens 142, and the light entrance window 140. By providing the notch filter 110 outside the cell 113, it is easy to adjust an incident angle of the light 106 with respect to the notch filter 110.

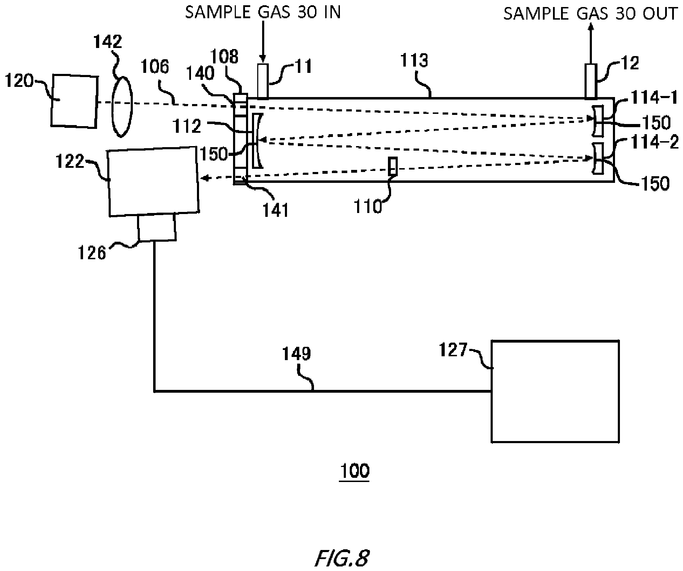

Fig. 8 is a diagram showing another configuration example of the gas analyzer 100. The gas analyzer 100 of the present example is different from that of the examples of Fig. 2 to Fig. 6 in the position at which the notch filter 110 is provided. Other structures are similar to those of any of the aspects described in Fig. 2 to Fig. 6.

The notch filter 110 of the present example is arranged in the optical path between the second reflecting mirror 114-2 and the light receiving element 126. As shown in Fig. 8, the notch filter 110 may be arranged between the second reflecting mirror 114-2 and the light emission window 141 inside the cell 113. The notch filter 110 may be arranged in the optical path between light emission window 141 and light receiving element 126. The notch filter 110 may be arranged in the optical path between light emission window 141 and the spectroscope 122.

When the restriction band of the notch filter 110 is adjusted, an angle of the reflecting mirror placed at a subsequent stage of the notch filter 110, or the like, may have to be adjusted. For example, when the wavelength band of the restriction band is adjusted by adjusting the incident angle of the light 106 with respect to the notch filter 110, the angle of the reflecting mirror placed at a subsequent stage of the notch filter 110 may be accordingly adjusted. With the present example, the reflecting mirror does not exist in the optical path after the notch filter 110, and thus there is no need to adjust the angle of the reflecting mirror.

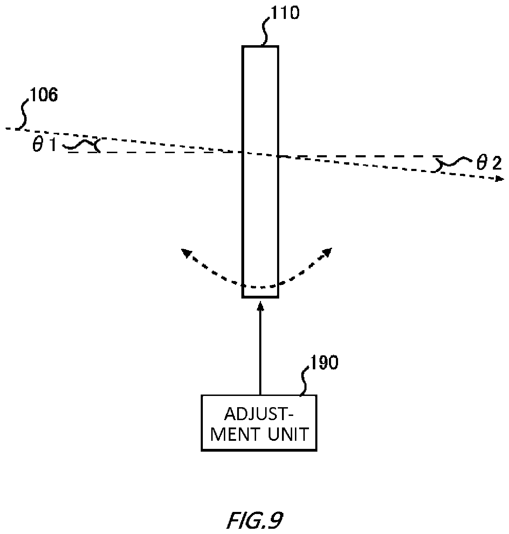

Fig. 9 is a diagram showing an example of adjusting a wavelength of a restriction band of the notch filter 110. The gas analyzer 100 of the present example includes an adjustment unit 190 that adjusts the wavelength of the restriction band of the notch filter 110.

The notch filter 110 of the present example is a filter in which a plurality of dielectric films with different refractive indices are stacked. In this case, it is possible to adjust the restriction band of the notch filter 110, by adjusting an incident angle θ1 of the light 106 with respect to the notch filter 110. The adjustment unit 190 may adjust the incident angle θ1 by rotating the notch filter 110.

The adjustment unit 190 may adjust the incident angle θ1, based on the radiation spectrum of the light 106 emitted by the light source unit 120. The adjustment unit 190 may detect the maximum peak 300 in the radiation spectrum, and adjust the incident angle θ1 such that the peak 300 is included in the restriction band of the notch filter 110. The adjustment unit 190 may detect the maximum peak 300 in the wavelength band of the measurement target of the gas analyzer 100, in the radiation spectrum of the light 106.

The radiation spectrum of the light 106 may be measured by the light receiving element 126, or spectrum data may be provided by a user or the like. For example, the light 106 is incident on the cell 113, by the cell 113 being set to be in a vacuum state, or in a state in which a gas having no absorption spectrum in the measurement band of the gas analyzer 100, is introduced into the cell 113. The light receiving element 126 may measure the radiation spectrum of the light 106 which is emitted from the cell 113 in this state.

When the incident angle θ1 of the notch filter 110 is changed, an emission angle θ2 of the light 106 from the notch filter 110 may vary. When the emission angle θ2 of the light 106 varies, the optical path at a subsequent stage of the notch filter 110 is changed.

When the optical path is changed, an optical axis of the light 106 which is incident on the light receiving element 126 is changed, and thus the intensity of the light 106 which is detected by the light receiving element 126 may vary. The processing unit 127 may correct the intensity of the light reception signal when the adjustment unit 190 adjusts the incident angle θ1. In the processing unit 127, correction data in which an amount of the adjustment of the incident angle θ1 and an amount of the correction of the intensity of the light reception signal are associated with each other, may be preset. The correction data may be generated from actual measurement data regarding how the intensity of the light received at the light receiving element 126 is changed when the incident angle θ1 is sequentially changed.

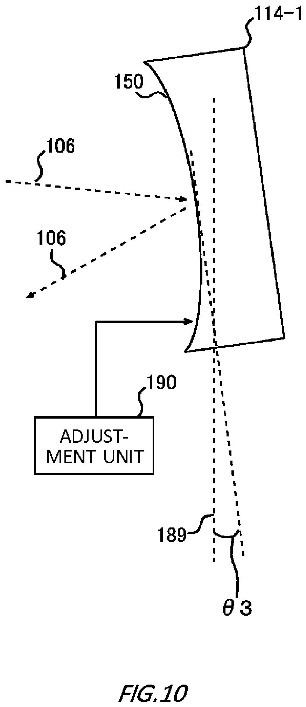

Fig. 10 is a diagram showing a reflecting mirror placed at a subsequent stage of the notch filter 110. In the present example, the first reflecting mirror 114-1 is shown. The light 106 which has passed through the notch filter 110 first reaches the first reflecting mirror 114-1. The adjustment unit 190 of the present example adjusts the angle of the reflecting surface 150 of at least one of the reflecting mirrors placed at subsequent stages of the notch filter 110, when the incident angle θ1 (refer to Fig. 9) of the light 106 with respect to the notch filter 110 is adjusted. The reflecting surface 150 in the present example is a concave surface; however, the reflecting surface 150 may be a flat surface, or may include both of the concave surface and the flat surface.

As described in Fig. 9, when the incident angle θ1 on the notch filter 110 is changed, the emission angle θ2 from the notch filter 110 is changed. The adjustment unit 190 adjusts an angle θ3 of the reflecting surface 150 of the reflecting mirror placed at the subsequent stage of the notch filter 110 to offset the change in the optical axis of the light 106 due to the change in the emission angle θ2. The angle θ3 is an angle of the reflecting surface 150 with respect to a predetermined reference plane 189. The reference plane 189 is, for example, a surface orthogonal to the longitudinal direction of the cell 113. In this manner, for example, a case where the optical axis of the light 106 deviates such that the light 106 is not applied to the reflecting surface 150 of the reflecting mirror placed at the subsequent stage, is prevented.

The adjustment unit 190 may adjust the angle θ3 of the reflecting surface 150 of the first reflecting mirror 114-1 immediately behind the notch filter 110. In a case where it is not possible to offset the deviation of the optical axis of the light 106 by adjusting the angle of the first reflecting mirror 114-1 alone, the adjustment unit 190 may further adjust the angle of the reflecting surface 150 of another reflecting mirror. In a case where it is possible to offset the deviation of the optical axis of the light 106 by adjusting the angle of the first reflecting mirror 114-1 alone, the adjustment unit 190 may not adjust the angle of the reflecting surface 150 of another reflecting mirror.

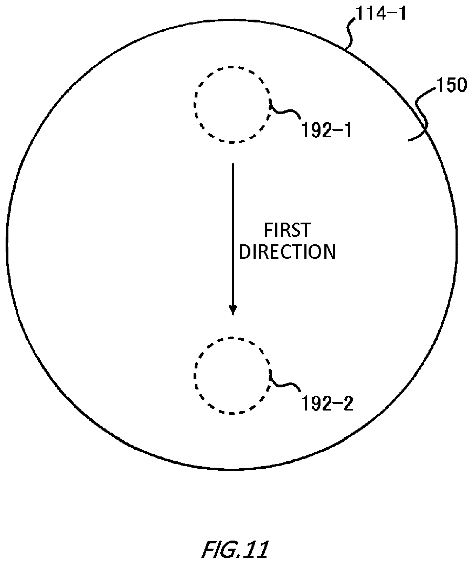

Fig. 11 is a diagram of a reflecting surface 150 of the reflecting mirror placed at the subsequent stage of the notch filter 110, viewed from a travel direction of the light 106. In the present example, the reflecting surface 150 of the first reflecting mirror 114-1 is shown. When the incident angle θ1 on the notch filter 110 is adjusted, the optical axis of the light 106 which is emitted from the notch filter 110 is changed. Because of that, a position of a spot 192 to which the light 106 is radiated, on the reflecting surface 150 of the reflecting mirror 114, moves in a first direction according to the changes of the incident angle θ1 and the emission angle θ2 of the notch filter 110.

In the adjustment unit 190 of the present example, a change range in which the incident angle θ1 on the notch filter 110 is able to be changed is set. When the incident angle θ1 with respect to the notch filter 110 is set to a minimum value in the change range, the light 106 is radiated to a position of a spot 192-1, for example. In addition, when the incident angle θ1 with respect to the notch filter 110 is set to a maximum value in the change range, the light 106 is radiated to a position of a spot position 192-2, for example. It is preferable for the reflecting mirror 114-1 to have the reflecting surface 150 with a size in which the spot 192-1 and the spot 192-2 are included, when the incident angle θ1 with respect to the notch filter 110 is changed from the minimum value to the maximum value. This makes it possible for the light 106 to be reflected by the reflecting surface 150 even when the incident angle θ1 in the notch filter 110 is changed. The reflecting mirror 114-1 has been described in Fig. 11; however, all of the reflecting mirrors placed at subsequent stages of the notch filter 110 may be similar.

The reflecting surface 150 of each reflecting mirror may has a circular shape, or may have another shape. For example, the reflecting surface 150 may have a length in the first direction greater than a length in a second direction orthogonal to the first direction. The gas analyzer 100 may have a combination of two or more of the configuration described in Fig. 9, the configuration described in Fig. 10, and the configuration described in Fig. 11.

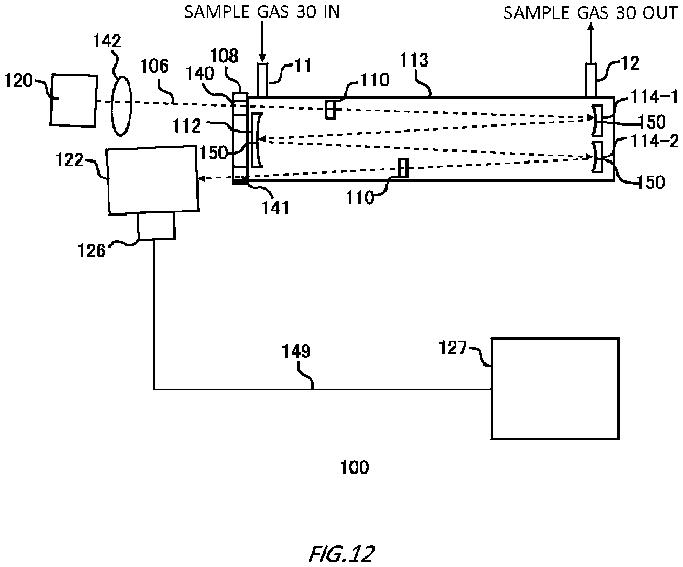

Fig. 12 is a diagram showing another configuration example of the gas analyzer 100. The gas analyzer 100 of the present example is different from that of the examples of Fig. 2 to Fig. 11 in that a plurality of notch filters 110 are provided. Other structures are similar to those of any of the aspects described in Fig. 2 to Fig. 11. The notch filters 110 of the present example are provided at a plurality of positions different from each other on the optical path.

The plurality of notch filters 110 may be provided inside the cell 113, the plurality of notch filters 110 may be provided outside the cell 113, or the notch filters 110 may be provided both inside and outside the cell 113. In the example of Fig. 12, the notch filters 110 are provided between the light entrance window 140 and the first reflecting mirror 114-1, and between the light emission window 141 and the second reflecting mirror 114-2. Pass characteristics of the respective notch filters 110 may be the same as or different from each other. The adjustment unit 190 may adjust the characteristic of each of the notch filters 110, or may adjust the characteristic of only some notch filter 110.

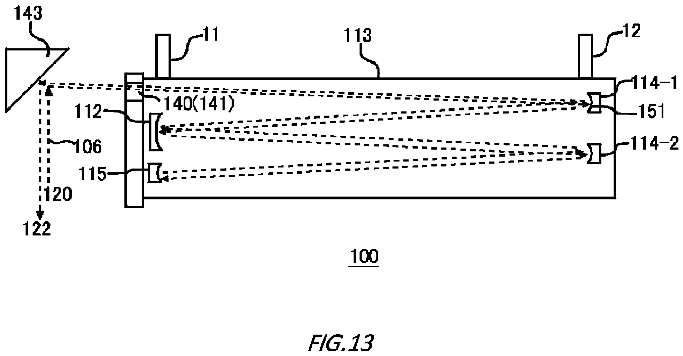

Fig. 13 is a diagram for describing the gas analyzer 100 according to a second example embodiment. In Fig. 13, the configurations other than that of the cell 113 among the configurations shown in Fig. 2 to Fig. 12 are omitted. The configurations other than that of the cell 113 may be similar to those of any of the aspects described in Fig. 2 to Fig. 12. The cell 113 in Fig. 13 is a cell of a return type in which the light entrance window 140 and the light emission window 141 are used as a common window; however, the cell 113 may have a configuration similar to those of example embodiments described in Fig. 2 to Fig. 12. In addition, the cell 113 in the example embodiments described in Fig. 2 to Fig. 12 may be the cell of the return type described in Fig. 13.

In the present example, the first reflecting mirror 114-1, the second reflecting mirror 114-2, the central reflecting mirror 112, and a returning reflecting mirror 115 are provided inside the cell 113. Each of the reflecting mirrors has a recessed surface portion 151 on the reflecting surface. The returning reflecting mirror 115 is arranged at an end portion on the same side as the central reflecting mirror 112, in the longitudinal direction of the cell 113. The returning reflecting mirror 115 is arranged on an opposite side of the light entrance window 140 across the central reflecting mirror 112.

The first reflecting mirror 114-1 is a reflecting mirror that the light 106 which has passed through the light entrance window 140, first reaches. The first reflecting mirror 114-1 reflects the light 106 from the light entrance window 140 toward the central reflecting mirror 112. The central reflecting mirror 112 reflects the light 106 from the first reflecting mirror 114-1 toward the second reflecting mirror 114-2.

The second reflecting mirror 114-2 is arranged to face the returning reflecting mirror 115, reflects the light 106 from the central reflecting mirror 112 toward the returning reflecting mirror 115, and reflects the light 106 from the returning reflecting mirror 115 toward the central reflecting mirror 112. The central reflecting mirror 112 reflects the light 106 from the second reflecting mirror 114-2 toward the first reflecting mirror 114-1. The first reflecting mirror 114-1 reflects the light 106 from the central reflecting mirror 112 toward the light emission window 141. With the present example, it is possible to easily increase the number of reflections of the light 106 without increasing the size of the cell 113. In the example of Fig. 13, the two reflecting mirrors 114 are arranged at positions facing the central reflecting mirror 112; however; in another example, more reflecting mirrors 114 may be arranged at positions facing the central reflecting mirror 112.

A distance between the two reflecting mirrors facing each other is substantially equal to a radius of curvature of the recessed surface portion 151 of the reflecting mirror. For example, the distance is 90% or more and 110% or less of the radius of curvature. The radius of curvature of the recessed surface portion 151 of each of the respective reflecting mirrors may also be substantially identical. For the radius of curvature of each of the reflecting mirrors, a ratio of a maximum value to a minimum value may be 100% or more and 120% or less.

The intensity of the light 106 received at the light receiving element 126 may vary, by a variation in a temperature of the gas analyzer 100 or the like. For example, when the curvature of the reflecting mirror is changed due to the variation in the temperature, a tilt of the recessed surface portion 151 of the reflecting mirror with respect to the optical axis is changed. The change in the tilt near the center of the recessed surface portion 151 is small; however, the change in the tilt with respect to the optical axis becomes comparatively great at the end portion of the reflecting surface 150 away from the optical axis. Because of that, when the variation in the temperature occurs, a change regarding whether a component of the light 106 away from the optical axis reaches the light receiving element 126 may occur, and an amount of the light received at the light receiving element 126 may be changed.

The gas analyzer 100 of the present example includes a collimator unit 143. The collimator unit 143 is arranged between the light source unit 120 and the cell 113. The collimator unit 143 converts the light 106 emitted by the light source unit 120 into the collimated light to be incident on the light entrance window 140. The collimator unit 143 of the present example uses a parabolic mirror. This makes it possible to generate collimated light with a small influence of an aberration. Note that the collimator unit 143 may be the lens shown in Fig. 2 or the like.

In the present example, a width of the recessed surface portion 151 of the first reflecting mirror 114-1 that the collimated light 106 entering from the light entrance window 140, first reaches, is smaller than a width of the collimated light 106. The recessed surface portion 151 is a portion that is a concave surface, in the reflecting surface of the first reflecting mirror 114-1. That is, the recessed surface portion 151 does not include a flat portion. The entire reflecting surface of the first reflecting mirror 114-1 may be the recessed surface portion 151.

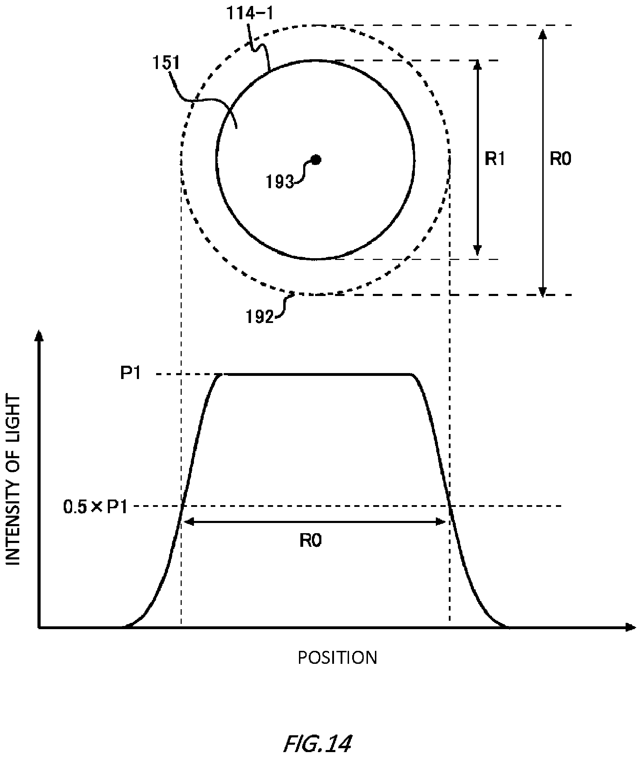

Fig. 14 is a diagram of a recessed surface portion 151 of a first reflecting mirror 114-1, and a spot 192 of the collimated light 106, as seen from the travel direction of the collimated light 106. The spot 192 in Fig. 14 indicates a spot at a position of the recessed surface portion 151. The position of the recessed surface portion 151 in the travel direction of the collimated light 106 is a position of a central portion 193 of the recessed surface portion 151. That is, the spot 192 is a range in which the collimated light 106 is radiated on a plane at the position. In another example, the spot 192 may be a spot of the collimated light 106 immediately after being emitted by the collimator unit 143, or may be a spot of the collimated light 106 at a position of the light entrance window 140. The spot 192 may be a range in which the intensity of the light on a plane perpendicular to the travel direction of the collimated light 106, is half a maximum value P1 (0.5×P1) or more. That is, in an intensity distribution of the light on the plane, a region of a full width at half maximum may be regarded as the spot 192 of the collimated light 106.

The width of the recessed surface portion 151 is set as R1, and a width of the spot 192 of the collimated light 106 is set as R0. The width may be a width in a surface parallel to an infinitesimal surface in the central portion 193 of the recessed surface portion 151. The width may be a width in a surface perpendicular to the travel direction of the collimated light 106. When the recessed surface portion 151 has a circular shape, the width of the recessed surface portion 151 is a diameter of the circular shape. When the recessed surface portion 151 is non-circular, for the surface, the width of the recessed surface portion 151 refers to a maximum of the width of the recessed surface portion 151. For example, when the recessed surface portion 151 has a square shape, the width of the recessed surface portion 151 is a length of a diagonal line of the square shape. A measuring method for the width of the spot 192 is also similar to that for the width of the recessed surface portion 151.

The width R1 of the recessed surface portion 151 is smaller than the width R0 of the spot 192 of the collimated light 106. In this manner, the component away from the central portion 193 of the recessed surface portion 151, in the collimated light 106, is not reflected by the recessed surface portion 151. Because of that, even when the tilt of the recessed surface portion 151 is changed due to the variation in the temperature, the collimated light 106 at the position away from the central portion 193 does not affect the measured value of the light receiving element 126. Because of that, it is possible to suppress an error due to the variation in the temperature. In addition, the light 106 is changed into the collimated light 106 by the collimator unit 143, and thus it is possible to flatten a distribution of the intensity of the light on the plane perpendicular to the travel direction of the collimated light 106. Because of that, even when the position of the optical axis of the collimated light 106 deviates from the central portion 193 of the recessed surface portion 151, it is possible to suppress the variation in an amount of the light radiated to the entire recessed surface portion 151, and it is possible to measure the gas concentration with a high precision. In addition, by each of the reflecting mirrors having the recessed surface portion 151, it is easy to maintain the collimation of the reflected light in the reflecting mirror. The width R1 may be 20 mm or less, or may be 10 mm or less.

The width R1 of the recessed surface portion 151 may be 80% or less of the width R0 of the spot 192 of the collimated light 106. This makes it easy to reduce the measurement error due to the variation in the temperature. The width R1 may be 75% or less of the width R0, or may be 70% or less. Note that when the width R1 is made to be too small, the amount of the light that reaches the light receiving element 126 becomes small, and an SN ratio decreases. The width R1 may be 50% or more of width R2. The width R1 may be 55% or more of the width R2, or may be 60% or more.

An overall width of the reflecting surface of the first reflecting mirror 114-1 may be smaller than the width R0 of the collimated light 106. For example, when the reflecting surface has a flat surface around the recessed surface portion 151, the overall width of the reflecting surface may be smaller than the width R0 of the collimated light 106. In addition, the entire reflecting surface may be the recessed surface portion 151. In this case, the width of the entire reflecting surface is the width R1 of the recessed surface portion 151. In Fig. 14, the first reflecting mirror 114-1 has been described; however, in another reflecting mirror of the cell 113, the width of the recessed surface portion 151 may be smaller than the width of the collimated light.

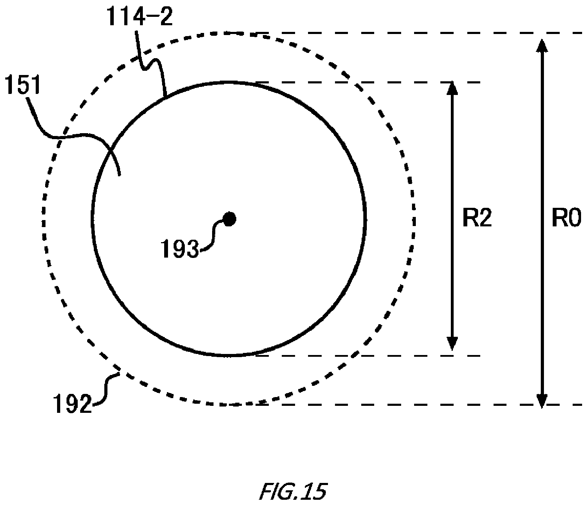

Fig. 15 is a diagram of the recessed surface portion 151 of a second reflecting mirror 114-2, as seen from the travel direction of the collimated light 106. In Fig. 15, the same spot 192 as that in Fig. 14 is shown to be superimposed. The width of the recessed surface portion 151 of the second reflecting mirror 114-2 is set as R2. The width R1 of the recessed surface portion 151 may be smaller than the width R0 of the spot 192 of the collimated light 106. The width R2 may be the same as the width R1. By setting the width R2 to be smaller than the width R0, even when the width of the collimated light 106 increases after the reflection by the first reflecting mirror 114-1, it is possible to form the width of the collimated light 106 again in the second reflecting mirror 114-2. This makes it possible to further suppress an error component due to the variation in the temperature, and to measure the gas concentration with a higher precision. The width R2 may be 20 mm or less, or may be 10 mm or less.

The width R2 may be smaller than the width R1. By gradually reducing the width of the reflecting mirror, even when the optical axis of the collimated light 106 deviates from the central portion 193 of the reflecting mirror, it is easy to radiate the collimated light 106 to the entire reflecting mirror. Because of that, it is possible to suppress the measurement error due to the deviation of the optical axis. In another example, the width of all of the reflecting mirrors other than the first reflecting mirror 114-1 may be greaterthan the width R1 of the first reflecting mirror 114-1. In this manner, even when the optical axis deviates at a subsequent stage of the first reflecting mirror 114-1, it is easy to reflect the entire collimated light 106 at each of the reflecting mirrors.

The width R2 may be greater than the width R1. The width R2 may be greater than the width R0. In the first reflecting mirror 114-1, the width of the collimated light 106 is formed to R1. Because of that, in a case where the width R2 of the second reflecting mirror 114-2 is the same as the width R1 of the first reflecting mirror 114-1, when the optical axis of the collimated light 106 deviates from the central portion 193 of the second reflecting mirror 114-2, a part of the collimated light 106 is away from the second reflecting mirror 114-2 and is not reflected by the second reflecting mirror 114-2. Because of that, the amount of the light that reaches the light receiving element 126 may become too small. By setting the width R2 largerthan the width R1, it is easy to secure the amount of the light that reaches the light receiving element 126. The second reflecting mirror 114-2 may be the reflecting mirror immediately before the light emission window 141, as the structure shown in Fig. 2. By forming the diameter of the collimated light 106 in the first reflecting mirror 114-1, to be small, it is possible to efficiently reduce the measurement error. In addition, by setting the second reflecting mirror 114-2 to be comparatively great, it is easy to secure the amount of the light that reaches the light receiving element 126.

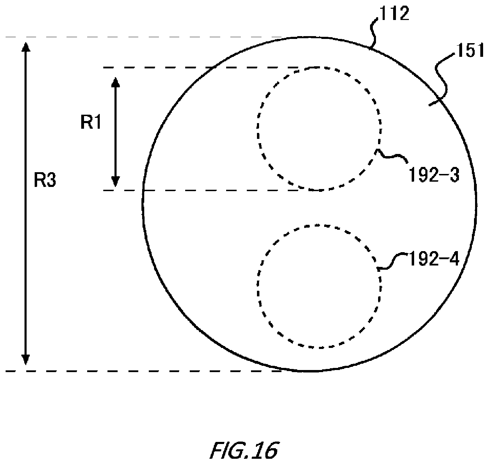

Fig. 16 is a diagram of the recessed surface portion 151 of a central reflecting mirror 112, and the spot 192 of the collimated light 106 at a position of the recessed surface portion 151 of the central reflecting mirror 112, as seen from the travel direction of the collimated light 106. The width of the recessed surface portion 151 of the central reflecting mirror 112 is set as R3. The collimated light 106 which reaches the central reflecting mirror 112 is formed to have the width R1 by the first reflecting mirror 114-1. The width R3 may be greater than the width R1. In the structure shown in Fig. 13, the collimated light 106 (a spot 192-3) from the first reflecting mirror 114-1, and the collimated light 106 (a spot 192-4) from the second reflecting mirror 114 are incident, on the central reflecting mirror 112. The spot 192-3 and the spot 192-4 may be arranged at locations different from each other in the recessed surface portion 151. The central reflecting mirror 112 may have the width R3 which is greater than the width R1 to be able to reflect both of the collimated light 106 from the first reflecting mirror 114-1, and the collimated light 106 from the second reflecting mirror 114. The width R3 may be greater than the width R0. The width R3 may be greater than 20 mm, or may be 30 mm or more.

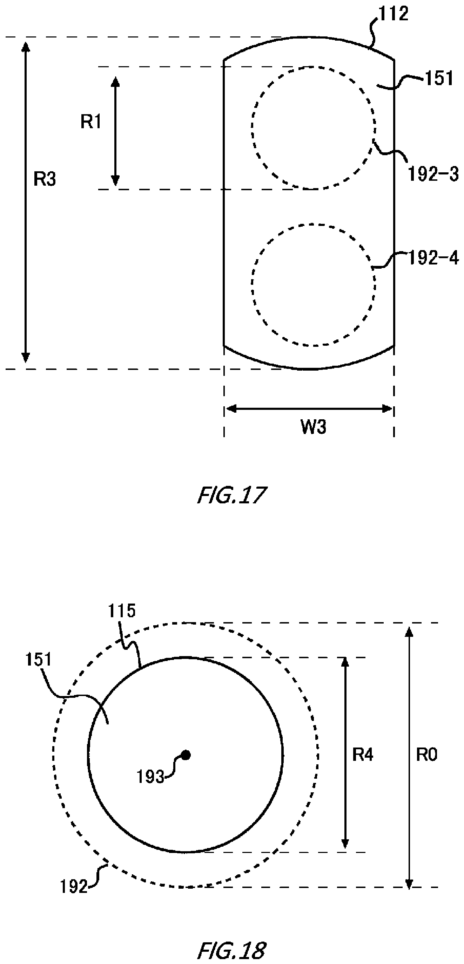

Fig. 17 is a diagram showing another shape example of the recessed surface portion 151 of the central reflecting mirror 112. In the example of Fig. 16, the central reflecting mirror 112 has a circular shape. The central reflecting mirror 112 in the present example is non-circular. In the central reflecting mirror 112, in the direction in which the spot 192-3 and the spot 192-4 are aligned, a width is set as R3; and in a direction orthogonal to the direction, a width is set as W3. The width W3 may be smaller than the width R3. The width W3 may be greater, or may be smaller than the width R1. In such a structure as well, the central reflecting mirror 112 can reflect both of the collimated light 106 from the first reflecting mirror 114-1, and the collimated light 106 from the second reflecting mirror 114.

Fig. 18 is a diagram of the recessed surface portion 151 of a returning reflecting mirror 115, as seen from the travel direction of the collimated light 106. In Fig. 15, the same spot 192 as that in Fig. 14 is shown to be superimposed. The width of the recessed surface portion 151 of the returning reflecting mirror 115 is set as R4. The width R4 of recessed surface portion 151 may be smaller than the width R0 of the spot 192 of the collimated light 106. The width R4 may be the same as the width R1. The width R4 may be the same as the width R2. By setting the width R4 to be smaller than the width R0, even when the width of the collimated light 106 increases after the reflection by the second reflecting mirror 114-2, it is possible to form the width of the collimated light 106 again in the returning reflecting mirror 115. This makes it possible to further suppress an error component due to the variation in the temperature, and to measure the gas concentration with a higher precision.

The width R4 may be smaller than the width R2. By gradually reducing the width of the reflecting mirror, even when the optical axis of the collimated light 106 deviates from the central portion 193 of the reflecting mirror, it is easy to radiate the collimated light 106 to the entire reflecting mirror. Because of that, it is possible to suppress the measurement error due to the deviation of the optical axis. The width R4 may be greater than the width R1. The width R4 may be greater than the width R2. The width R4 may be 20 mm or less, or may be 10 mm or less.

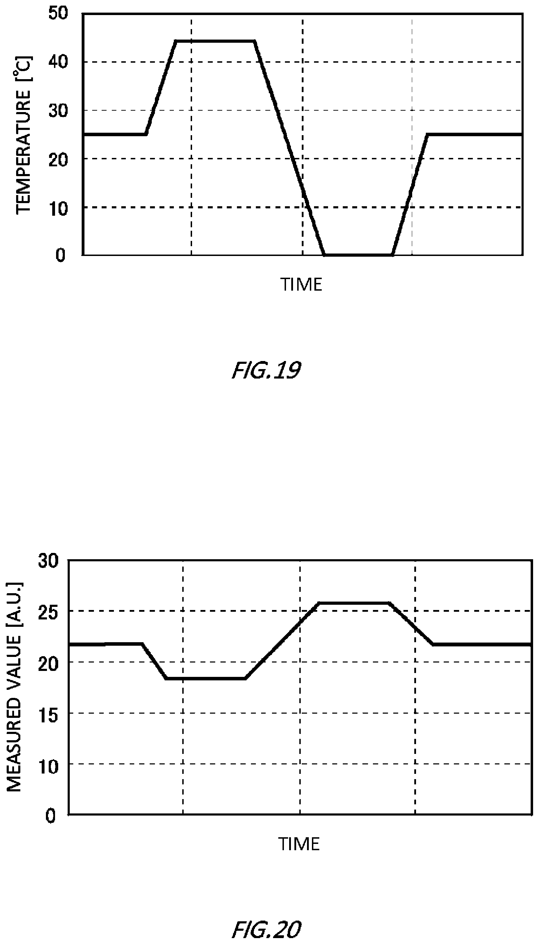

Fig. 19 is a diagram for describing an operation test of the gas analyzer 100. In the present example, a measured value of an amount of the light received at a specific wavelength at the light receiving element 126, when the temperature of the gas analyzer 100 was changed, was detected. Fig. 19 is an example of a pattern of a change in the temperature of the gas analyzer 100.

Fig. 20 is a diagram showing a measured value of an amount of light received by the light receiving element 126 in a reference example. In the present example, the widths of the recessed surface portions 151 of all of the reflecting mirrors are equal to or greater than the width of the collimated light 106. In the reference example, the measured value of the light receiving element 126 varies greatly accompanying the variation in the temperature.

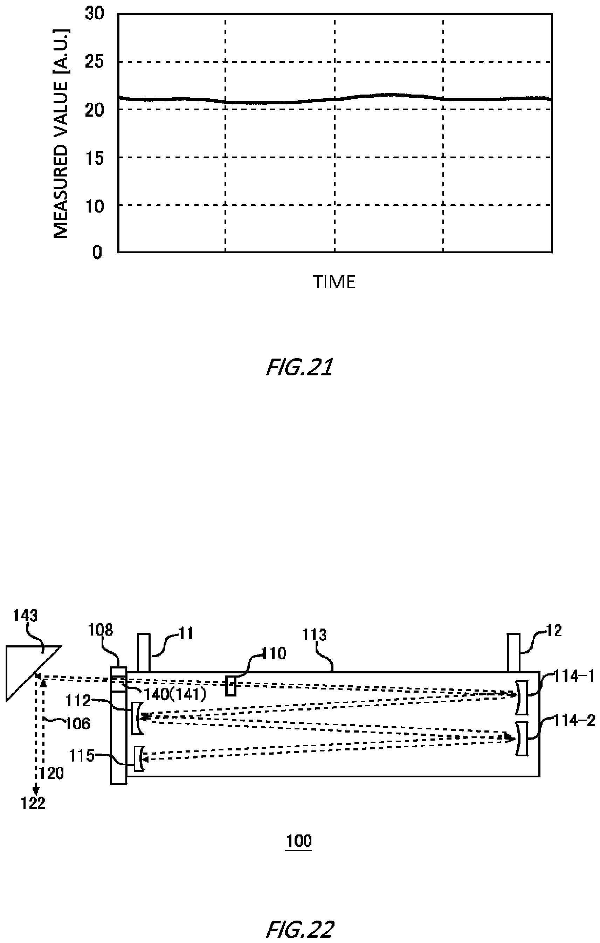

Fig. 21 is a diagram showing a measured value of an amount of the light received by the light receiving element 126 in the second example embodiment. In the present example, the width R1 of the recessed surface portion 151 of the first reflecting mirror 114-1 is smaller than the width R0 of the collimated light. In the present example, it is possible to suppress the variation in the measured value accompanying the variation in the temperature.

Fig. 22 is a diagram showing the gas analyzer 100 according to a third example embodiment. The gas analyzer 100 of the present example has a configuration in which the notch filter 110 of any of the aspects described in the first example embodiment of Fig. 2 to Fig. 12 is added to the gas analyzer 100 of any of the aspects described in the second example embodiment of Fig. 13 to Fig. 21. The gas analyzer 100 of the present example may further include the adjustment unit 190 described in Fig. 9 or Fig. 10. The gas analyzer 100 of the present example may have each function described in Fig. 2 to Fig. 12. The gas analyzer 100 of the present example may have a configuration in which the configuration of the first example embodiment and the configuration of the second example embodiment are appropriately combined.

While the present invention has been described by way of the embodiments, the technical scope of the present invention is not limited to the above-described embodiments. It is apparent to persons skilled in the art that various alterations or improvements can be made to the above-described embodiments. It is also apparent from the description of the claims that embodiments added with such alterations or improvements can be included in the technical scope of the present invention.

### EXPLANATION OF REFERENCES

10: flue; 11: gas intake pipe; 12: gas outlet pipe; 14: gas filter; 15: preheater; 16: preheating temperature controller; 17: pump; 30: sample gas; 100: gas analyzer; 106: light; 110: notch filter; 112: central reflecting mirror; 113: cell; 114: reflecting mirror; 115: returning reflecting mirror; 118: heater; 119: temperature adjustment unit; 120: light source unit; 122: spectroscope; 126: light receiving element; 127: processing unit; 140: light entrance window; 141: light emission window; 142: collimator lens; 143: collimator unit; 149: communication line; 150: reflecting surface; 151: recessed surface portion; 189: reference plane; 190: adjustment unit; 192: spot; 193: central portion; 200: gas analysis apparatus; 300: peak; 302: region.

## Claims

1. A gas analyzer that measures a concentration of a measurement target component which is contained in a sample gas, the gas analyzer comprising:
a light source unit that emits light having an absorption wavelength of the measurement target component;
a collimator unit that converts the light into a collimated light;
a cell that houses one or more reflecting mirrors that reflect the light, in a space in which the sample gas is encapsulated;
a light receiving element that acquires a radiation spectrum of the light which has passed through the cell; and
a processing unit that processes a light reception signal of the light receiving element to measure the concentration of the measurement target component, wherein
the one or more reflecting mirrors include a first reflecting mirror at which the collimated light is first reflected,
the first reflecting mirror includes a recessed surface portion that reflects the collimated light, and
a width of the recessed surface portion is smaller than a width of the collimated light.

2. The gas analyzer according to claim 1, wherein
an entire width of the first reflecting mirror is smaller than the width of the collimated light.

3. The gas analyzer according to claim 1, wherein
the width of the recessed surface portion is 80% or less of the width of the collimated light.

4. The gas analyzer according to claim 3, wherein
the width of the recessed surface portion is 50% or more of the width of the collimated light.

5. The gas analyzer according to any one of claims 1 to 4, wherein:
the one or more reflecting mirrors includes a second reflecting mirror arranged at a subsequent stage of the first reflecting mirror;
the second reflecting mirror include a recessed surface portion that reflects the collimated light; and
a width of the recessed surface portion of the second reflecting mirror is smaller than the width of the collimated light.

6. The gas analyzer according to claim 5, wherein
the width of the recessed surface portion of the first reflecting mirror and the width of the recessed surface portion of the second reflecting mirror are identical.

7. The gas analyzer according to claim 5, wherein
the width of the recessed surface portion of the second reflecting mirror is greater than the width of the recessed surface portion of the first reflecting mirror.

8. The gas analyzer according to any one of claims 1 to 4, wherein:
the one or more reflecting mirrors include a returning reflecting mirror that reflects the collimated light radiated from a second reflecting mirror to the second reflecting mirror;
the returning reflecting mirror includes a recessed surface portion that reflects the collimated light; and
a width of the recessed surface portion of the returning reflecting mirror is smaller than the width of the collimated light.

9. The gas analyzer according to claim 8, wherein:
the one or more reflecting mirrors includes a central reflecting mirror that reflects the collimated light radiated from the first reflecting mirror to the second reflecting mirror, and reflects the collimated light radiated from the second reflecting mirror to the first reflecting mirror,
the central reflecting mirror includes a recessed surface portion that reflects the collimated light; and
a width of the recessed surface portion is greater than the width of the collimated light.

10. The gas analyzer according to any one of claims 1 to 4, further comprising
a notch filter that is arranged in any optical path from the light source unit to the light receiving element and that has a restriction band for reducing an intensity at any peak of the radiation spectrum of the light which is emitted by the light source unit.
